# NEUE EUROPÄISCHE PATENTSCHRIFT

(11) **EP 3 253 584 B2**
(45) Veröffentlichungstag und Bekanntmachung des Hinweises auf die Entscheidung über den Einspruch: **20.12.2023**
(45) Hinweis auf die Patenterteilung: 23.09.2020
(21) Anmeldenummer: 16703466.9
(22) Anmeldetag: 02.02.2016
(51) Int. Cl.: B42D 25/324, B42D 25/328, B42D 25/351, B42D 25/373, B42D 25/435, B42D 25/47

(54) **OPTISCH VARIABLES SICHERHEITSELEMENT**
OPTICALLY VARIABLE SECURITY ELEMENT
ÉLÉMENT DE SÉCURITÉ OPTIQUEMENT VARIABLE

(30) Priorität: 06.02.2015 DE 102015202106
(43) Veröffentlichungstag der Anmeldung: 13.12.2017
(73) Patentinhaber: SCRIBOS GmbH, 69126 Heidelberg (DE)
(72) Erfinder: BORGSMÜLLER, Stefan, 69126 Heidelberg (DE); SCHULTE-WIEKING, Kay, 69115 Heidelberg (DE)
(74) Vertreter: Louis Pöhlau Lohrentz
(86) Internationale Anmeldenummer: PCT/EP2016/052115
(87) Internationale Veröffentlichungsnummer: WO 2016/124561

(56) Entgegenhaltungen:
- EP-A2- 2 284 805
- EP-A2- 2 284 805
- WO-A1-99/13157
- WO-A1-2007/079851
- WO-A1-2011/138039
- WO-A1-2012/048847
- WO-A1-2013/054119
- WO-A1-2014/012667
- WO-A2-2007/093300
- JP-A- 2007 106 116
- JP-A- 2009 090 531
- JP-A- 2014 000 762
- JP-A- 2014 108 576
- US-B1- 6 288 842

## Beschreibung

Die Erfindung betrifft ein Verfahren zur Herstellung eines optisch variablen Sicherheitselementes.

Aus der US 6,036,233 ist ein Datenträger mit einer optisch variablen Struktur bekannt, bei der Motive in Teilmotive zerlegt und auf eine Reliefschicht aufgebracht werden. Die Reliefschicht weist Teilbereiche, die in gleiche Richtung weisen, auf, auf die die Teilmotive aufgebracht werden. Der Querschnitt senkrecht zur Reliefschicht ist dreiecksförmig ausgebildet. Auf die jeweils eine Seite des Dreiecks werden Teilbilder des einen Motivs und auf die jeweils andere Seite des Dreiecks werden Teilbilder des anderen Motivs aufgebracht, sodass sich bei einem schrägen Blickwinkel die Teilbilder des einen Motivs oder bei einem anderen schrägen Blickwinkel die Teilbilder des anderen Motivs jeweils zum Motiv bzw. anderen Motiv zusammensetzen. Dabei schattet das eine Motiv jeweils das andere Motiv ab, sodass im Wesentlichen unabhängig von der Art des Lichteinfalls bei richtigem Blickwinkel jeweils nur das eine oder andere Motiv gesehen werden kann.

In der EP 0 3722 74 A ist ein mehrschichtiger Aufzeichnungsträger offenbart mit sich überlagernden, farblich kontrastierenden Schichten, in denen durch lokale Abtragung einzelne Schichtbereiche unter Freilegung tieferliegender, andersfarbiger Schichtbereiche mittels eines Laserstrahls in zumindest zum Teil human lesbarer Form Informationen dargestellt sind.

Diese Klassen optisch variabler Elemente enthalten Mikroreliefstrukturen. Mit solchen Reliefstrukturen können die Einschränkungen von ebenen optisch variablen Elementen überwunden werden. Insbesondere können spezielle winkelabhängige optische Effekte erzielt werden. Meist ist auch die Abhängigkeit der optischen Effekte von der Beleuchtungssituation geringer, wodurch solche optisch variablen Elemente allgemein eingesetzt werden können. Grundsätzlich enthalten optisch variable Elemente mit Reliefstrukturen mindestens eine Reliefschicht sowie mindestens eine Informationsschicht. Hierbei sind Relief- und Informationsschicht meist bezüglich Lage, Raster, Winkel, Größe usw. aufeinander abgestimmt. Die Reliefschicht wirkt mit der Informationsschicht zusammen, und beide Schichten erzeugen zusammen einen gemeinsamen optischen Effekt, z. B. ein Bild für den Betrachter, das sich in Abhängigkeit vom Betrachtungswinkel ändert. Die Informationsschicht kann z. B. eine gedruckte Schicht sein.

Unter der Klasse der optisch variablen Elemente mit Reliefstrukturen gibt es solche, die Mikrolinsenarrays enthalten.

Mit Array wird hierbei eine regelmäßige Wiederholung der Mikrolinsen in einem vorgegebenen Raster bezeichnet. Die Mikrolinsen können hierbei orthogonal, hexagonal oder anderweitig regelmäßig angeordnet sein. Auch unregelmäßige Anordnungen sind bekannt. Meist werden diese optisch variablen Elemente als Moire-Vergrößerer oder als eine Spielart davon eingesetzt (siehe z.B. Kamal et. al, "Properties of moire magnifiers", Opt. Eng. 37(11), 3007-3014 (Nov01, 1998)). In diesem Fall ist unter dem Mikrolinsenarray als Informationsschicht ein Mikrobildarray angeordnet, wobei das Raster des Mikrolinsenarrays und das des Mikrobildarrays sich leicht voneinander unterscheiden. Die Informationsschicht ist hierbei eben. Die Mikrolinsen fokussieren in dieser Anwendung auf die Informationsschicht, d.h. zwischen Mikrolinsenebene und Informationsschicht befindet sich eine Trennschicht der Dicke der Fokuslänge der Mikrolinsen. Wird ein solches Element betrachtet, so ergibt sich für den Betrachter ein vergrößertes Bild des Mikrobilds, welches in einer gewissen Tiefe zu schweben scheint und welches sich beim Kippen des Elements scheinbar bewegt. Von diesem Prinzip gibt es zahlreiche Variationen. Beispielsweise kann anstatt eines vergrößerten Mikrobilds eine beliebige, betrachtungswinkelabhängige Animation dargestellt werden.

Anstatt Mikrolinsenarrays können Mikrolentikulararrays verwendet werden, also eindimensionale Arrays von Zylinderlinsen. In diesem Fall wird das Bild, welches dargestellt werden soll, nur in einer Dimension gestaucht, und zwar senkrecht zu den Zylinderlinsen. Dieses gestauchte Bild wird als eindimensionales Array unter die Zylinderlinsen als Informationsschicht gebracht, wobei sich das Raster des Bildarrays wieder leicht von dem des Linsenarrays unterscheidet. Auch hier kann man wieder einen Moire-Vergrößerer erhalten. Im Gegensatz zu den zweidimensionalen Linsen bewegt sich das vergrößerte Bild beim Kippen jedoch nur in einer Dimension (senkrecht zu den Zylinderlinsen). Ein stereoskopischer Tiefeneffekt kann erzielt werden, wenn die Zylinderlinsen senkrecht zu einer Verbindungslinie zwischen den beiden Augen eines Betrachters ausgerichtet sind.

Bei optisch variablen Elementen mit Mikrolinsenarrays befinden sich die Reliefschicht und die (ebene) Informationsschicht gewöhnlich in zwei verschiedenen Ebenen. Dies liegt insbesondere daran, dass die Informationsschicht meist in einem Abstand, z.B. im Abstand der Fokuslänge der Mikrolinsen zur Mikrolinsenschicht, angeordnet ist. Die Mikrolinsenschicht muss in der Regel oberhalb der Informationsschicht angeordnet sein, so dass der Betrachter von oben durch die Linsen auf die Informationsschicht sehen kann. Diese Anordnung hat bzgl. der Herstellung einige Nachteile. So muss entweder die Informationsschicht bedruckt werden, bevor die Mikrolinsenschicht aufgebracht wird, oder der Schichtaufbau muss von unten, also von der gegenüberliegenden Seite der Mikrolinsen, bedruckt werden. Dadurch, dass das Mikrobildraster der Informationsschicht zu dem Mikrolinsenraster nicht verdreht sein darf, ergeben sich produktionstechnisch große Hürden.

Unter den optisch variablen Elementen mit Reliefstrukturen gibt es noch weitere Ausführungsformen, bei denen die Informationsschicht direkt an die Reliefschicht angrenzt und somit die Reliefform selbst annimmt. Dies kann z.B. durch direktes Bedrucken der Reliefschicht geschehen oder durch Freilegen von angrenzenden Farbschichten mittels eines Lasers, der z.B. in einem gewissen Winkel auf das Relief trifft. Der optisch variable Effekt ergibt sich in diesem Fall durch Abschattung. Wenn ein Betrachter ein solches Element unter verschiedenen Winkeln betrachtet, so sieht er hauptsächlich die ihm zugewandten Flächen des Reliefs, während die ihm abgewandten Flächen verborgen, also abgeschattet sind. Besteht das Relief z.B. aus einer Art Wellblechstruktur, so kann der Betrachter von der einen Seite ein anderes Bild wahrnehmen als von der anderen Seite, siehe z.B. EP 0 372 274 A2 und US 6 036 233. Um diesen Effekt zu erreichen, müssen zwei Bilder in Streifen aufgeteilt und miteinander verkämmt werden sowie anschließend registergenau zur Wellblechstruktur auf die Wellblechstruktur aufgebracht werden. Es können beispielsweise auch vierseitige (Mikro-) Pyramiden verwendet werden, wobei jeder Seite der Pyramiden ein anderes von vier Bildern zugeordnet ist (US 8 100 436 B2). Bei der Betrachtung des optisch variablen Elements von jeweils einer der vier Seiten ergibt sich jeweils ein anderes Bild.

Herkömmlich optisch variable Elemente mit Reliefstrukturen haben einige Nachteile. So muss die Erzeugung der Bildschicht registergenau zur Reliefstruktur erfolgen. Die Reliefstruktur muss sehr ausgeprägt sein, um den Abschattungseffekt zu erreichen. Das bedeutet, dass große Winkel verwendet werden müssen und somit relativ hohe Reliefstrukturen benötigt werden. Ansonsten kann es dazu kommen, dass aus einem bestimmten Betrachtungswinkel nicht nur das gewünschte Bild wahrgenommen wird, sondern in störender Weise auch die anderen Bilder, die für andere Betrachtungswinkel vorgesehen sind. Wird ein solches Element von oben betrachtet, so ergibt sich in den meisten Fällen eine unerwünschte Mischung aller Einzelbilder.

Aus der nachveröffentlichten Patentanmeldung EP 2 889 152 A1 ist ein Sicherheitselement einer Banknote bekannt, das direkt in die Banknote eingebracht ist.

Die WO 2007/079851 A1 offenbart ein Sicherheitselement mit verschieden winkelgestellten Mikrospiegeln, wobei verschiedene Motive einer bestimmten Winkelstellung den Mikrospiegeln zugeordnet sind und so mehrere Motive codiert werden können. Nachteilig an diesem Sicherheitselement ist, dass die Einzelelementoberflächen nicht gleichartig gebildet sind, sondern aus einer Vielzahl verschieden gestellter Mikrospiegel bestehen und somit in der Herstellung und Fertigung aufwendig und teuer sind.

Die genannte Druckschrift wird als nächstkommender Stand der Technik angesehen.

Die WO 2012/048847 A1 betrifft ein Sicherheitselement mit einer Mehrzahl optischer Einzelelemente, das ein dreidimensionales Motiv erzeugt, das aus über oder unter dem Darstellungselement schwebenden Lichtflecken besteht. Nachteiligerweise ist hier keine Codierung mehrerer Motive möglich.

In der EP 2 284 805 A2 ist ein Sicherheitselement mit einer Prägestruktur und einer Beschichtung offenbart, die so kombiniert sind, dass bei Änderung der Betrachtungsrichtung unterschiedliche Informationen auf den Erhebungen der Prägestruktur sichtbar werden. Die verschiedenen auf der Prägestruktur codierten Motive werden durch die Prägestruktur voneinander abgeschattet, so dass die Erhebungen, also die Reliefstruktur, relativ deutlich ausgeprägt sein müssen. Das Sicherheitsetikett benötigt somit einen nachteiligerweise hohen Aufbau.

In der WO 2014/012667 A1 ist ein Sicherheitselement mit einer als reflektierendem Gitter ausgebildeten Mikrostruktur offenbart. Die Motive kommen durch Beugung reflektierter Strahlung zustande. Beugungsstrukturen sind in der Herstellung relativ aufwendig und erfordern eine hohe Präzision in der Fertigung.

Die WO 2011/138039 A1 offenbart ein Sicherheitselement und eine Mikrostruktur, die nachteiligerweise nur ein einzelnes Motiv aufweisen.

Es ist Aufgabe der Erfindung, ein eingangs genanntes Verfahren zur Herstellung eines optisch variablen Sicherheitselementes zur Verfügung zu stellen, das die oben genannten Nachteile zumindest teilweise überwindet.

Die Aufgabe wird in ihrem ersten Aspekt durch ein Verfahren mit den Merkmalen des Anspruchs 1 gelöst.

Dabei wird gemäß dem in Anspruch 1 definierten Verfahren ein erstes Motiv in erste Teilmotive zerlegt. Den ersten Teilmotiven werden erste gerichtete Reflexionsgrade zugeordnet, die das Motiv kodieren. Vorzugsweise handelt es sich dabei entweder um Bereiche mit einem hohen Reflexionsgrad, vorzugsweise vollständig reflektierend, oder um Bereiche mit einem sehr geringen Reflexionsgrad, vorzugsweise vollständig absorbierend.

Dabei wird vorzugsweise jedem Teilmotiv über die gesamte Ausdehnung des Teilmotivs jeweils ein gleicher Reflexionsgrad zugeordnet. Es ist jedoch auch denkbar, dass der Reflexionsgrad sich über die Ausdehnung eines oder einiger oder aller Teilmotive verändert.

Erfindungsgemäß wird eine Reliefschicht mit einer Vielzahl an optischen Einzelelementen mit jeweils einer Einzelelementoberfläche gefertigt. Die optischen Einzelelemente sind gleichartig und in zwei, drei oder jeder höheren Anzahl an Gruppen jeweils gleichartiger Elemente in der Reliefschicht angeordnet.

Vorzugsweise jede der Einzelelementoberflächen wird in Reflexionsbereiche unterteilt, dabei wird vorzugsweise jede der Einzelelementoberflächen in gleich viele Reflexionsbereiche unterteilt, und die Anzahl der Reflexionsbereiche entspricht günstigerweise der Anzahl der kodierten Motive. Es ist jedoch auch denkbar, dass die Anzahl der Reflexionsbereiche größer ist als die Anzahl der kodierten Motive.

Erste Reflexionsbereiche verschiedener Einzelelementoberflächen werden dem ersten Motiv zugeordnet, und die dem ersten Motiv zugeordneten ersten Reflexionsbereiche werden mit den ersten gerichteten Reflexionsgraden versehen. Das heißt, das in erste Teilmotive zerlegte erste Motiv wird in Reflexionsbereiche kodiert. Dabei ist es bevorzugt vorgesehen, Motive zu verwenden, die aus schwarzer Farbe auf weißem Grund gebildet sind, und dass das schwarz-weiß Motiv dann in Teilmotive und jedes der Teilmotive entweder vollständig schwarz oder vollständig weiß ausgebildet wird. Wenn eines der Teilmotive ausschließlich aus weißem Hintergrund besteht, wird diesem ein über seine gesamte Ausdehnung sehr geringer Reflexionsgrad zugeordnet, wenn das Teilmotiv ausschließlich schwarz ausgebildet ist, wird dem Teilmotiv über seine gesamte Ausdehnung ein hoher Reflexionsgrad zugeordnet. Sollte ein Teilmotiv aus Bereichen schwarzer Farbe und weißem Hintergrund bestehen, so werden dem Teilmotiv unterschiedliche erste gerichtete Reflexionsgrade zugeordnet.

Bei der Erfindung handelt es um ein Verfahren zur Herstellung eines optisch variablen Sicherheitselements mit einer Reliefschicht und einer direkt an die Reliefschicht angrenzenden Informationsschicht, die das Profil der Reliefschichtannimmt. Die Informationsschicht wird durch die Summe der Reflexionsbereiche gebildet, die mit gerichteten Reflexionsgraden versehen sind. Wesentlich an der Erfindung ist, dass die ersten Reflexionsbereiche mit ersten gerichteten Reflexionsgraden versehen werden, die Reflexion also nicht-diffus ist.

Bei Reflexion von Licht an Grenzflächen unterscheidet man zwischen gerichteter Reflexion und diffuser Reflexion. Meist tritt eine Mischung aus gerichteter und diffuser Reflexion auf. Gerichtete Reflexion tritt insbesondere auf, wenn die Oberfläche im Vergleich zur Wellenlänge des Lichts hinreichend glatt ist, d. h. die Rauhigkeitsstrukturen sind wesentlich kleiner als die Wellenlänge des Lichts. Gekrümmte Oberflächen und gerichtete Reflexion schließen sich nicht gegenseitig aus, als Beispiel sei hier ein Parabolspiegel eines Teleskops angegeben. Gerichtete Reflexion verhält sich gemäß "Einfallswinkel gleich Ausfallswinkel", wobei bei gekrümmten Flächen der Winkel zur Flächennormalen (Normale der Tangentialfläche) ausschlaggebend ist.

Als Reflexionsgrad bezeichnet man das Verhältnis der reflektierten zur einfallenden Lichtintensität. Als gerichteter Reflexionsgrad wird im Folgenden das Verhältnis der gerichtet reflektierten zur einfallenden Lichtintensität bezeichnet. Man kann den gerichteten Reflexionsgrad auch als Spiegelungsgrad bezeichnen. Für Anwendungen als optisch variables Sicherheitselement sind vor allem die gerichteten Reflexionsgrade im sichtbaren Wellenlängenbereich des Lichts (ca. 400 nm - 700 nm) von Interesse. Besonders hohe Reflexionsgrade haben hier Metalle, z.B. Aluminium, Silber, Gold, Kupfer usw. Dies ist besonders interessant, da durch Bedampfen, Galvanisieren oder durch Bedruckung mit einem Metallpigmentlack dünne und glatte hochreflektierende Schichten erzeugt werden können.

Ein mittels des erfindungsgemäßen Verfahrens hergestelltes optisches Sicherheitselement beruht auf unterschiedlicher gerichteter Reflexion. Daher ist es besonders vorteilhaft, wenn der maximale gerichtete Reflexionsgrad eines erfindungsgemäßen optischen Elements besonders hoch ist, vorzugsweise zumindest in einem sichtbaren Wellenlängenbereich mehr als 5%, vorzugsweise mehr als 10%, vorzugsweise mehr als 50% und optimaler Weise mehr als 90%, beträgt. Denn je höher der Reflexionsgrad ist, desto besser ist die Sichtbarkeit des Features.

Die Beleuchtung des optisch variablen Sicherheitselementes erfolgt vorzugsweise nicht-diffus.

Als diffus wird eine Beleuchtung bezeichnet, die gleichmäßig aus allen Richtungen auf das optisch variable Element trifft, beispielsweise Tageslicht im Freien bei Bewölkung oder eine ausgedehnte Flächenlichtquelle oder indirektes Licht, welches durch eine große beleuchtete Fläche erzeugt wird. Als nicht-diffus wird eine Beleuchtung bezeichnet, die aus einem kleinen und mittleren Raumwinkelbereich auf das optisch variable Element trifft, beispielsweise eine Punktlichtquelle, ein Spotlicht, eine Glühbirne, eine Lampe, eine Neonröhre, ein Fenster oder Sonnenlicht.

Hierbei ist zu beachten, dass die Unterscheidung zischen nicht-diffuser und diffuser Lichtquelle durchaus fließend verläuft und durchaus eine nicht-diffuse Beleuchtung durch einen wolkenlosen Himmel bei Sonnenschein und eine diffuse Beleuchtung bei einem bewölkten Himmel realisiert sein kann. Ob sich das erfindungsgemäße optisch variable Verhalten des Wechselns zwischen den Motiven einstellt, hängt auch von der Größe der Reflexionsbereiche ab, die kleiner gewählt werden können, je nicht-diffuser das einfallende Licht ist.

Die Erfindung beruht auf der gerichteten Reflexion von Licht auf gekrümmten Oberflächen. Wird eine gerichtet reflektierende gekrümmte Oberfläche von einer nicht-diffusen Lichtquelle beleuchtet, so kann ein Betrachter einen Reflex der Lichtquelle auf der gerichtet reflektierenden gekrümmten Oberfläche an einem Ort der Oberfläche erkennen, an dem die Flächennormale der Oberfläche parallel zur Winkelhalbierenden des Winkels zwischen einer Geraden von der Lichtquelle zum Ort auf der Oberfläche und einer Geraden vom Beobachter zum Ort auf der Oberfläche ist. Dies entspricht dem Reflexionsgesetz "Einfallswinkel gleich Ausfallswinkel" und kann je nach Krümmung an mehreren Orten auf einer gekrümmten Oberfläche erfüllt sein, so dass ein Betrachter mehrere spiegelnde Reflexe an unterschiedlichen Positionen wahrnehmen kann. An Orten, an denen diese Bedingung nicht erfüllt ist oder die nicht gerichtet reflektieren, kann der Betrachter keinen spiegelnden Reflex wahrnehmen. Die Orte, an denen spiegelnde Reflexe wahrgenommen werden, sind bei einer gekrümmten Oberfläche abhängig von der Position der Lichtquelle und von der Position des Beobachters relativ zur gekrümmten Oberfläche. Werden diese Positionen geändert, so ändern sich auch die Orte an der Oberfläche, an denen ein spiegelnder Reflex wahrgenommen wird. So können z.B. von unterschiedlichen Betrachtungspositionen unterschiedliche spiegelnde Reflexe wahrgenommen werden.

Erfindungsgemäß sind die gekrümmte Oberfläche und die unterschiedlich gerichtet reflektierenden Reflexionsbereiche darauf so aufeinander abgestimmt, dass ein Betrachter aus verschiedenen Positionen unterschiedliche Motive wahrnimmt. Diese Motive sind aus spiegelnden Reflexen zusammengesetzt. Ein Vorteil der Erfindung ist, dass ein spiegelnder Lichtreflex je nach Reflexionsgrad eine große Helligkeit besitzen kann und somit auch das zusammengesetzte Motiv. Je größer der maximale gerichtete Reflexionsgrad der Oberfläche ist, desto heller erscheint das Motiv.

Die Erfindung weist gegenüber dem Stand der Technik deutliche Vorteile auf. Herkömmliche optisch variable Elemente, bei denen die Informationsschicht direkt an die Reliefstruktur angrenzt, beruhen auf Abschattung. Dadurch muss der Winkelbereich, der benötigt wird, um zwei verschiedene Bilder getrennt voneinander darstellen zu können, sehr groß sein. Um zwei Bilder durch Abschattung vollständig voneinander zu trennen, müssen sie auf Flächen angeordnet sein, die einen Winkel von 90 ° zueinander haben.

Wird der Winkel verkleinert, ist die Abschattung nicht mehr vollständig. Dadurch können in einem optisch variablen Element nicht sehr viele unterschiedliche Motive kodiert werden. Im Falle der vierseitigen Pyramiden sind dies z.B. nur vier, im Falle der Wellblechstrukturen nur zwei.

Die Erfindung beruht nicht auf Abschattung, und eine Abschattung erweist sich überraschenderweise als nicht notwendig. Der Betrachter sieht aus einer bestimmten Position die spiegelnden Reflexe, aus denen das Motiv für diese Position zusammengesetzt wird. Zusätzlich sind in dieser Position prinzipiell auch alle anderen Strukturen zu sehen (nicht abgeschattet), d.h. die Bereiche unterschiedlichen Reflexionsgrades, die für andere Betrachtungspositionen vorgesehen sind. Insofern müsste eigentlich eine Überlagerung mehrerer Motive wahrgenommen werden. Die störenden Motive sind jedoch im Vergleich zu den spiegelnden Reflexen so dunkel, dass sie nur als homogener Hintergrund wahrgenommen werden. Diese Wahrnehmung als homogener Hintergrund wird weiterhin vorzugsweise durch kleine laterale Größe der Strukturen verstärkt, die vorzugsweise kleiner ist als das Auflösungsvermögen des menschlichen Auges.

Vorzugsweise werden Positionen der ersten Reflexionsbereiche auf der Einzelelementoberflächen ermittelt, indem aus einer vorgegebenen ersten Betrachterposition eine Position einer sichtbar gerichteten Reflexion einer Lichtquelle auf jeder der Einzelelementoberflächen ermittelt wird und um die Positionen der Reflexe der gerichteten Reflexionen herum die einem ersten Motiv zugeordneten ersten Reflexionsbereiche angeordnet werden. Die ersten Reflexionsbereiche, die einem ersten Motiv zugeordnet werden, werden also derart auf den einzelnen Elementoberflächen verteilt, dass aus einer vorgegebenen Betrachterposition in einem bestimmten Winkel auf das optisch variable Element erste Reflexe einer vorzugsweise Punktlichtquelle oder einer nicht-diffusen Lichtquelle gebildet werden und um die ersten Reflexe die ersten Reflexionsbereiche gebildet werden, auf die dann die Teilmotive des ersten Motives verteilt werden.

Ein optisch variables Sicherheitselement entsteht, wenn wenigstens ein weiteres Motiv in jeweils weitere Teilmotive zerlegt wird, denen teilweise jeweils weitere gerichtete Reflexionsgrade zugeordnet werden, die jeweils das weitere Motiv kodieren, und die Einzelelementoberfläche in Reflexionsbereiche unterteilt wird und jeweils weitere Reflexionsbereiche verschiedener Einzelelementoberflächen wenigstens einem weiteren Motiv zugeordnet werden und die jeweils dem wenigstens einen weiteren Motiv zugeordneten weiteren Reflexionsbereiche mit den jeweils weiteren gerichteten Reflexionsgraden versehen werden. Unter einem weiteren Motiv ist hier als auch im Weiteren mehr als ein einzelnes weiteres Motiv, nämlich auch zwei, drei oder jede noch höhere Anzahl an Motiven zu verstehen.

Dabei wird nicht nur ein erstes Motiv, sondern auch wenigstens ein weiteres Motiv auf dem optisch variablen Sicherheitselement kodiert, wobei günstigerweise wenigstens eine von der ersten Betrachterposition abweichende weitere Betrachterposition gewählt wird und wenigstens eine weitere Position wenigstens einer weiteren gerichteten Reflexion der Lichtquelle auf jede der einzelnen Elementoberflächen ermittelt wird und um die wenigstens eine weitere Position der wenigstens einen weiteren gerichteten Reflexionen herum die dem wenigstens einen weiteren Motiv zugeordneten weiteren Reflexionsbereiche angeordnet werden. Mehrere Motive können in einer zweidimensionalen Reliefschicht oder einer eindimensionalen Reliefschicht ausgebildet werden.

Prinzipiell funktioniert die Erfindung mit beliebigen Reliefs, also gekrümmten Oberflächen, die Bereiche unterschiedlicher gerichteter Reflexionsgrade enthalten. Auch komplett zufällig gewählte Freiformflächen sind möglich. In diesem Fall ist die Berechnung, welche Flächenelemente mit welchem Reflexionsgrad belegt werden, sehr komplex und muss mithilfe von 3D Programmen und Simulationen ermittelt werden. Auch die Herstellung solcher Elemente erweist sich als sehr komplex. Aus diesem Grund sind Reliefs zu bevorzugen, die zumindest in Teilbereichen sich wiederholende Einzelstrukturen aufweisen. Grundsätzlich kann man bei den sich wiederholenden Einzelstrukturen zwischen zweidimensionalen und im Wesentlichen eindimensionalen Einzelstrukturen unterscheiden.

Bei sich wiederholenden zweidimensionalen Einzelelementen wird jedes einzelne der M sich wiederholenden Einzelelemente als ein Mehrfachmotivpunkt aufgefasst. Die wahrgenommene Helligkeit eines Reflexionsbereichs der Mehrfachmotivpunkte ist abhängig von Position und Lage der Lichtquelle, des Sicherheitselements und des Betrachters sowie des gerichteten Reflexionsgrads an der Stelle, an der der Reflex erscheint. Die M Mehrfachmotivpunkte werden jeweils in N Reflexionsbereiche unterteilt, wobei jeder der N Reflexionsbereiche der M Mehrfachmotivpunkte mit einem von M Teilmotiven eines von N Motiven korrespondiert. Der gerichtete Reflexionsgrad der N Reflexionsbereiche der M Mehrfachmotivpunkte wird entsprechend der Helligkeit des korrespondierenden Teilmotivs des Motivs eingestellt. Hat z.B. das korrespondierende Teilmotiv eine geringe Helligkeit, wird ein niedriger gerichteter Reflexionsgrad eingestellt und umgekehrt. Jedes der N Motive kann dann von einem Betrachter aus einer anderen Position durch spiegelnde Reflexe wahrgenommen werden.

Vorteilhafterweise werden die zweidimensionalen Strukturen in einem regelmäßigen zweidimensionalen Raster wiederholt. Ein solches Raster kann orthogonal, hexagonal oder anderweitig regelmäßig sein. Die Einzelelemente können konkav, konvex oder konvex/konkav sein. Beispielsweise bestehen die Einzelelemente aus Halbkugeln, Kugelabschnitten, Halbellipsoiden, Ellipsoidabschnitten, Parabolabschnitten oder Strukturen mit geringen Abweichungen davon oder anderweitig gewölbten Einzelelementen.

Als im Wesentlichen eindimensional werden Einzelelemente des Sicherheitselementes bezeichnet, deren Länge deutlich größer als deren Breite ist und deren Schnittbild senkrecht zur langen Achse entlang dieser Achse in Längsrichtung im Wesentlichen gleich ist.

Bei sich wiederholenden, im Wesentlichen eindimensionalen Einzelelementen wird jedes einzelne der K sich wiederholenden Einzelelemente als eine Mehrfachmotivlinie aufgefasst. Diese Mehrfachmotivlinie ist parallel zur eindimensionalen Struktur in L Mehrfachmotivpunkte aufgeteilt, wobei diese Aufteilung willkürlich gewählt werden kann. Daraus ergeben sich insgesamt K*L Mehrfachmotivpunkte. Die wahrgenommene Helligkeit eines Reflexionsbereiches des Mehrfachmotivpunktes ist abhängig von Position und Lage der Lichtquelle, des Einzelelements und des Betrachters sowie des gerichteten Reflexionsgrads an der Stelle, an der der Reflex erscheint. Die Lichtquelle sollte in diesem Fall eine Mindestausdehnung haben, die der Größe des optisch variablen Sicherheitselements entspricht, um den Effekt optimal wahrnehmen zu können. Die M Mehrfachmotivpunkte werden jeweils in N Reflexionsbereiche unterteilt, wobei jeder der N Reflexionsbereiche der M Mehrfachmotivpunkte zu einem von M Teilmotiven eines von N Motiven korrespondiert. Der gerichtete Reflexionsgrad der N Reflexionsbereiche der M Mehrfachmotivpunkte wird entsprechend der Helligkeit des korrespondierenden Mehrfachmotivpunkts des Motivs eingestellt. Hat z.B. der korrespondierende Mehrfachmotivpunkt eine geringe Helligkeit, wird ein niedriger gerichteter Reflexionsgrad eingestellt und umgekehrt. Jedes der N Motive kann dann von einem Betrachter aus einer anderen Position durch spiegelnde Reflexe wahrgenommen werden.

Vorteilhafterweise werden die eindimensionalen Einzelelemente in einem regelmäßigen Raster wiederholt. Die Einzelelemente können konkav, konvex oder konvex/konkav sein. Beispielsweise bestehen die Schnittbilder der Einzelelemente aus Halbkreisen, Kreisabschnitten, Ellipsenabschnitten, Parabelabschnitten oder Strukturen mit geringen Abweichungen davon oder anderweitig gewölbten Strukturen.

Vorteilhafterweise werden Positionen der ersten Reflexionsbereiche auf den Einzelelementoberflächen ermittelt, indem aus einer vorgegebenen ersten Betrachterposition eine Position eines ersten Reflexes einer sichtbaren gerichteten Reflexion einer Lichtquelle auf jeder der Einzelelementoberflächen ermittelt wird und indem um die Positionen der ersten Reflexe der gerichteten Reflexionen herum die einem ersten Motiv zugeordneten ersten Reflexionsbereiche angeordnet werden.

Bei mehreren Motiven, die aus unterschiedlichen Betrachterpositionen und vorzugsweise nur aus genau diesen Betrachterpositionen wahrgenommen werden können, wird eine von der ersten Betrachterposition abweichende weitere Betrachterposition gewählt und eine Position eines weiteren Reflexes einer weiteren gerichteten Reflexion der Lichtquelle auf jeder der Einzelelementoberflächen ermittelt und um die Positionen der weiteren Reflexe der weiteren gerichteten Reflexion herum werden die den weiteren Motiv zugeordneten weiteren Reflexionsbereiche angeordnet.

Eine nicht-diffuses Licht aussendende Lichtquelle erzeugt Reflexe auf den Einzelelementoberflächen. Die Reflexe sind hell, wenn der Reflexionsgrad hoch ist und gering, wenn der Reflexionsgrad niedrig ist. Die Position der Reflexe auf der Einzelelementoberfläche hängt von dem Betrachterwinkel ab, mit dem der Betrachter auf das optisch variable Sicherheitselement blickt bei einer vorgegebenen Lage des Sicherheitselementes und einer relativ zum Sicherheitselement vorgegebenen Anordnung der Lichtquelle. Je nach Betrachterwinkel wandern die Reflexe auf den Einzelelementoberflächen entlang. Die einem Motiv zugeordneten Reflexionsbereiche werden grundsätzlich so gewählt, dass weitere Reflexe, die einem weiteren Motiv zugeordnet sind, nicht aus der ersten Betrachterposition wahrgenommen werden können und umgekehrt erste Reflexe, die dem ersten Motiv zugeordnet sind, nicht aus einer weiteren Betrachterposition wahrgenommen werden können.

Des Weiteren ist es vorzugsweise vorgesehen, dass die Reflexionsbereiche und die weiteren Reflexionsbereiche einfallendes Licht gerichtet reflektieren.

Günstigerweise ist die Profilschicht derart ausgebildet, dass die ersten und die weiteren Reflexionsbereiche bei nicht-diffusem Lichteinfall aus der weiteren Betrachterposition bzw. der ersten Betrachterposition nicht zu erkennen sind und bei diffusem Lichteinfall sowohl das erste als auch das weitere Motiv sowohl aus der ersten als auch aus der weiteren Betrachterposition zu erkennen sind.

Die ersten und die weiteren Reflexionsbereiche sind günstigerweise so angeordnet, dass sie sich gegenseitig nicht abschatten, also gemeinsam im Blickbereich des Betrachters in vorzugsweise jeder der Betrachterpositionen liegen. Reflexe sind jedoch bei gerichteter Reflexion für den Betrachter nur dann zur erkennen, wenn er sich in der ersten oder in der weiteren Betrachterposition befindet.

Gegenüber bekannten Reliefs kann die erfindungsgemäße Reliefschicht sehr geringe Reliefhöhen aufweisen, um den gewünschten Wechseleffekt oder Kippeffekt zu erzielen. Günstigerweise liegen die Ausdehnungen der Einzelelemente in einer Größenordnung unterhalb des Auflösungsvermögens des Auges, das bei 80 µm liegt.

Gefertigt wurden bereits Einzelelemente mit einem Durchmesser von 40 µm, die sich bei einer kugelabschnittförmigen Gestalt der Einzelelemente in einer Höhe von 2,5 µm bis 3 µm über eine Ebene des Sicherheitselementes erheben. Bei einer derart geringen Höhe eines Kugelabschnitts kann, abgesehen von extremen Blickwinkeln von kleiner als 20° über der Ebene des Sicherheitselementes, beinahe die gesamte Einzelelementoberfläche gesehen werden.

Bei dem erfindungsgemäßen Verfahren wird die Reliefschicht zunächst vollständig metallisiert und danach die Informationsschicht ausgebildet, indem Reflexionsbereiche mit niedrigem Reflexionsgrad entmetallisiert werden. Die Entmetallisierung erfolgt mit einem Laserlithographen. Verwendete Laserlithographen werden fokussiert auf die metallisierte Schicht gebündelt. In praktischen Ausführungsformen weist ein Durchmesser des fokussierten Laserstrahls etwa 1 µm bis 10 µm auf, sodass auf Einzelelemente mit einem Durchmesser von zum Beispiel 40 µm ungefähr 40 bis 4 verschiedene Teilmotive aufgebracht werden können.

Das optisch variable Sicherheitselement wird durch eines der eingangs genannten Verfahren hergestellt.

Günstigerweise sind die ersten Reflexionsbereiche auf den Elementoberflächen um Positionen eines Reflexes einer gerichteten Reflexion einer Lichtquelle in eine vorgegebene erste Betrachterposition angeordnet.

Erfindungsgemäß ist ein weiteres Motiv in weitere Teilmotive zerlegt. Den weiteren Teilmotiven sind weitere gerichtete Reflexionsgrade zugeordnet, die jeweils das weitere Motiv kodieren. Die Einzelelementoberfläche ist in den ersten und weitere Reflexionsbereiche unterteilt. Die weiteren Reflexionsbereiche verschiedener, vorzugsweise aller Einzelelementoberflächen sind dem weiteren Motiv zugeordnet, und die dem weiteren Motiv zugeordneten weiteren Reflexionsbereiche sind mit den weiteren gerichteten Reflexionsgraden versehen.

Vorzugsweise wird neben dem ersten Motiv ein weiteres Motiv auf das Sicherheitselement aufgebracht, wobei unter einem weiteren Motiv hier auch mehr als ein einzelnes weiteres Motiv, nämlich auch zwei, drei oder jede noch höhere Anzahl an Motiven zu verstehen ist.

Die weiteren Reflexionsbereiche sind günstigerweise auf den Einzelelementoberflächen jeweils um Position eines weiteren Reflexes einer gerichteten weiteren Reflexion der Lichtquelle in jeweils eine vorgegebene weitere Betrachterposition angeordnet, sodass aus der ersten Betrachterposition das erste Motiv und aus einer weiteren Betrachterposition ein weiteres Motiv beobachtet werden kann. Der gleiche Effekt wird natürlich auch erzielt, wenn die erste Betrachterposition und die weitere Betrachterposition zusammenfallen und das Einzelelement um den entsprechenden Winkel zwischen erster und weiterer Betrachterposition gekippt wird. In der praktischen Handhabung des optischen Elementes wird üblicherweise der letztgenannte Kippeffekt beobachtet.

Die Reliefschicht kann zumindest entlang einer Längsrichtung sich wiederholende Einzelelemente aufweisen. Die Reliefschicht kann aber auch in einer Längsrichtung und in einer Querrichtung, die quer zur Längsrichtung verläuft, sich wiederholende Einzelelemente aufweisen. Im ersten Fall kann es sich beispielsweise um nebeneinander angeordnete Zylinderabschnitte handeln, während im zweiten Fall beispielsweise in einem orthogonalen Muster Kugelabschnitte angeordnet werden. Vorzugsweise weist die Reliefschicht M Einzelelemente auf und jedes der Einzelelemente weist jeweils N Reflexionsbereiche auf.

Jedes Einzelelement ist kleiner als 100 µm, vorzugsweise kleiner als 75 µm, besonders bevorzugt kleiner als 50 µm. Jedes Einzelelement kann bis zu 100 oder 20 oder 5 oder 2 Reflexionsbereiche aufweisen. Die Einzelelemente können kugelabschnittförmig ausgebildet sein oder zylinderabschnittförmig, es sind jedoch auch andere Ausgestaltungsformen der Einzelelemente wie gekrümmte Oberflächen der Einzelelemente denkbar. Es sind auch Mischungen verschiedener Einzelelemente denkbar.

Vorzugsweise können zwischen benachbarten Einzelelementen planare Bereiche vorgesehen sein. Die planaren Bereiche weisen vorzugsweise weitere optisch wirksame Strukturen aus der Gruppe Beugungsgitter, Fourier- und Fresnelhologramme auf. Damit können gleichzeitig verschiedene optische Sicherheitselemente auf dem optisch variablen Sicherheitselement aufgebracht werden.

Die optisch wirksamen Strukturen der planaren Bereiche können mit herkömmlichen Methoden hergestellt werden, z.B. durch Abprägung eines Masters. Bevorzugt enthält der Master sowohl die Mikrostrukturen der Einzelelemente als auch die optisch wirksamen Strukturen der planaren Bereiche, jeweils als NegativForm. Bevorzugt handelt es sich bei dem Master um einen Nickel-Shim, der bevorzugterweise auf einen Zylinder aufgebracht wird. Dadurch wird ein preisgünstiges Rolle-zu-Rolle Prägeverfahren möglich. Alternativ kann der Master ein Prägezylinder sein, der durch Diamant-Drehen hergestellt ist. Die Beugungsgitter der planaren Bereiche können in diesem Fall ebenfalls durch Diamant-Drehen erzeugt werden.
- Fig. 1a, 1b: eine schematische Darstellung einer Reflexion an einer gekrümmten Oberfläche mit hohem gerichteten Reflexionsgrad,
- Fig. 2: eine Reflexion auf einer Oberfläche, die ein Array von Kugelabschnitten aufweist,
- Fig. 3a: ein Array von Kugelabschnitten in einer Draufsicht,
- Fig. 3b: ein erstes Motiv,
- Fig. 3c: ein zweites Motiv,
- Fig. 3d: ein Kugelabschnittarray in Fig. 3a mit jeweils zwei Reflexionsbereichen pro Kugelabschnitt,
- Fig. 3e, 3f: das sich für den Betrachter aus unterschiedlichen Betrachterpositionen darstellende reflektierte Motiv der Motive in Fig. 3b, 3c,
- Fig. 4: eine Unterteilung des Arrays in Fig. 3a in vier Reflexionsbereiche je Kugelabschnitt,
- Fig. 5: Beleuchtung der Kugeloberfläche durch eine vergrößerte Beleuchtungsfläche,
- Fig. 6: eine als Halbzylinder ausgebildetes Einzelelement einer Reliefschicht mit schematischem Strahlengang
- Fig. 7a: eine als Halbzylinder ausgebildete Reliefschicht,
- Fig. 7b: ein erstes Motiv,
- Fig. 7c: ein zweites Motiv,
- Fig. 7d: ein drittes Motiv,
- Fig. 7e: die Absatzzählung der Bilder in Fig. 7b-7d auf die Reliefschicht in Fig. 7a aufgebrachte Informationsschicht mit jeweils fünfzehn Teilbereichen je Halbzylinder,
- Fig. 7f-7h: die sich für den Betrachter darstellende Reflexion eines Lichtstrahls an dem optischen Element in Fig. 7e,
- Fig. 8: eine schematische Darstellung eines optischen Sicherheitselementes mit Kugelabschnitten und planaren Bereichen,
- Fig. 9a, 9b: eine Darstellung von Einzelbildern
- Fig. 10a-10d: eine Darstellung eines wandernden Motivs, das sich durch Verkippen des optischen Sicherheitselementes ergibt,
- Fig. 11a-11d: ein wanderndes Motiv, das sich durch Verkippen des optischen Sicherheitselementes ergibt, mit gleichbleibender Berandung,
- Fig. 12a-12d: verschiedene Schichtaufbauten des optischen Sicherheitselementes
- Fig. 13a-13d: verschiedene Schichtaufbauten des optischen Sicherheitselementes mit kontrastgebender Schicht
- Fig. 14: eine schematische Darstellung eines Laserlithographen zur Herstellung eines optischen Elementes

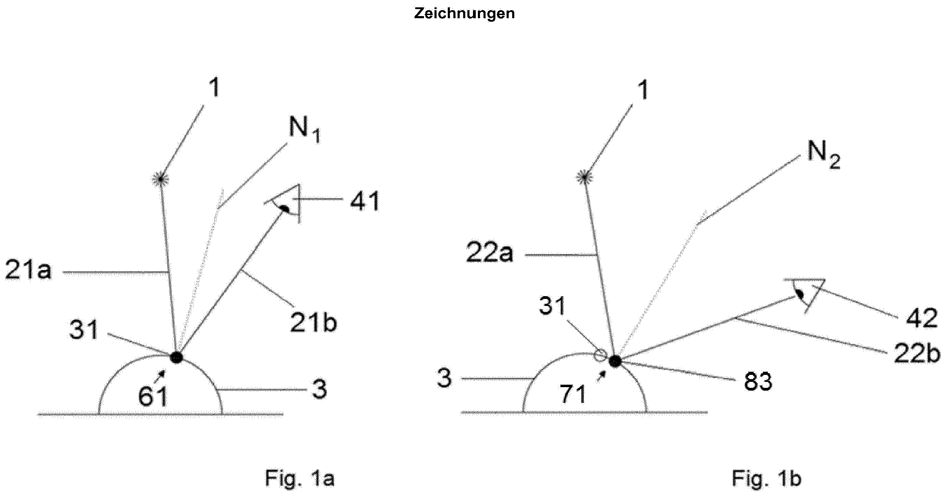

In den Fig. 1a und 1b ist schematisch das Reflexionsverhalten eines aus einer nicht-diffusen Lichtquelle 1 tretenden ersten einfallenden Lichtstrahles 21a an einer kugelabschnittförmigen Oberfläche 3 mit hohem gerichtetem Reflexionsgrad, also einer verspiegelten Halbkugel dargestellt. Wird die Oberfläche 3 der verspiegelten Halbkugel in diesem Fall von der als Punktlichtquelle ausgebildeten nicht-diffusen Lichtquelle 1 beleuchtet, so nimmt ein Betrachter aus einer ersten Betrachterposition 41 gemäß Fig. 1a einen ersten reflektierten Lichtstrahl 21b als einen spiegelnden ersten Reflex 31 der Lichtquelle 1 in Form eines hellen Lichtpunktes auf der verspiegelten Halbkugel wahr. Der erste Reflex 31 entsteht auf der verspiegelten Oberfläche 3 der Halbkugel an der Stelle eines ersten Reflexionsbereiches 61, an der eine erste Flächennormale N₁, die hier durch die gestrichelte Linie dargestellt ist, der verspiegelten Oberfläche 3 parallel zur Winkelhalbierenden des Winkels zwischen ersten ein- und ausfallendem Lichtstrahl 21a, 21b verläuft. Wenn der Betrachter die erste Betrachterposition 41 gemäß Fig. 1b in eine zweite Betrachterposition 42 ändert, so ändert sich auch der Ort des ersten Reflexes 31 zu einem zweiten Reflex 83.

In Fig. 1b bildet sich ein zweiter Reflex 83 in einem zweiten Reflexionsbereich 71 an der Stelle aus, an der eine zweite Flächennormale N₂ der verspiegelten Oberfläche 3, die ebenfalls durch eine gestrichelte Linie dargestellt ist, parallel zur Winkelhalbierenden der Winkels zwischen einem zweiten ein- und ausfallenden Lichtstrahl 22a, 22b verläuft. Die Helligkeit des ersten und zweiten Reflexes 31, 83 hängt von dem gerichteten Reflexionsgrad an dem Ort des Reflexes 31, 83 auf der Oberfläche 3 ab: Je höher der gerichtete Reflexionsgrad, desto heller der Reflex 31, 83. Wenn der Reflexionsgrad in dem ersten Reflexionsbereich 61, in dem der erste Reflex 31 auftritt und in dem zweiten Reflexionsbereich 71, in dem der zweite Reflex 83 auftritt, unterschiedlich ist, so wird der Betrachter abhängig von der Betrachtungsposition 41, 42 unterschiedlich helle Reflexe wahrnehmen.

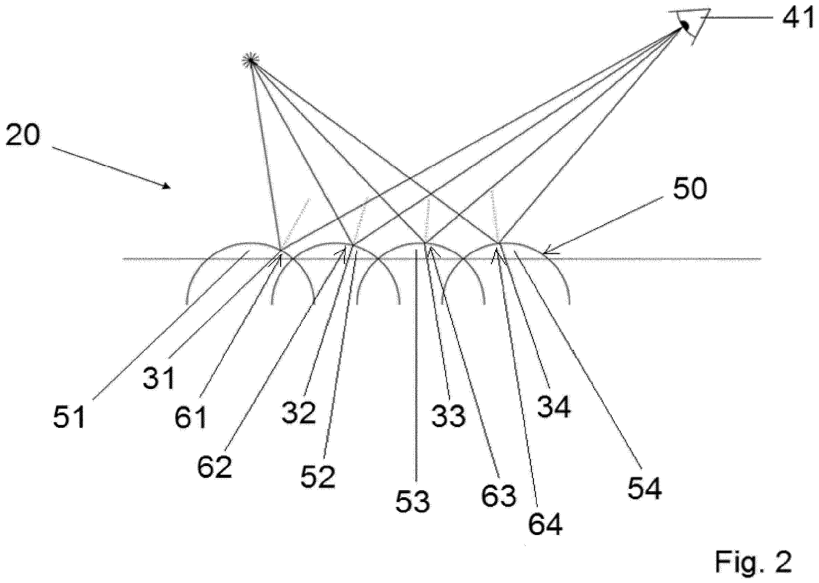

In Fig. 2 ist schematisch ein Schnitt eines optisch variablen Sicherheitselements 20 mit einer Reliefschicht 50 dargestellt, die als Kugelabschnitte 51, 52, 53, 54 ausgebildete Einzelelemente aufweisen, die in Form eines zweidimensionalen Arrays über die Reliefschicht 50 verteilt sind. Die Kugelabschnitte 51, 52, 53, 54 berühren sich in einer Ebene der Reliefschicht 50. Die Oberfläche 3 aller Kugelabschnitte 51, 52, 53, 54 ist vollständig verspiegelt.

Im Gegensatz zum Ausführungsbeispiel in den Fig. 1 a, b sind hier vier Kugelabschnitte 51, 52, 53, 54 dargestellt, sodass der Betrachter beim Blick aus der ersten Betrachterposition 41 auf das Array von Kugelabschnitten 51, 52, 53, 54 vier Reflexe 31, 32, 33, 34 erkennt, grundsätzlich kann der Betrachter aus der ersten Betrachterposition 41 so viele Reflexe 31, 32, 33, 34 erkennen wie Kugelabschnitte 51, 52, 53, 54 vorhanden sind. Die ersten Reflexe 31, 32, 33, 34 werden im Auge des Betrachters zu einem ersten (Gesamt-)Motiv zusammengesetzt.

Dabei ist jedoch zu beachten, dass der Ort des ersten Reflexes 31, 32, 33, 34 des ersten Motivs bei jedem der Kugelabschnitte 51, 52, 53, 54 aus einem anderen ersten Reflexionsbereich 61, 62, 63, 64 der Oberfläche 3 des jeweiligen Kugelabschnittes 51, 52, 53, 54 stammt, beispielsweise ist der in dem linken Kugelabschnitt 51 den ersten Reflex 31 des ersten Motivs verursachende erste Reflexionsbereich 61 weit rechts beinahe am Ende des Kugelabschnittes 51 angeordnet, während der den weiteren ersten Reflex 34 des ersten Motivs verursachende weitere erste Reflexionsbereich 64 des vierten Kugelabschnitts 54 beinahe zentral am Pol des Kugelabschnittes 54 angeordnet ist. Die ersten Reflexionsbereiche 61, 62, 63, 64, die das Gesamtmotiv zusammensetzen, müssen so angeordnet werden, dass sich aus der ersten Betrachterposition 41 die einzelnen ersten Reflexe 31, 32, 33, 34 zu einem ersten Gesamtmotiv zusammensetzen.

Da sich gemäß den Fig. 1a, 1b der Ort der Reflexe 31, 83 bei einem Wechsel von der ersten zur zweiten Betrachtungsposition 41, 42 ändert, können für verschiedene Betrachtungspositionen 41, 42 verschiedene Motive wahrgenommen werden.

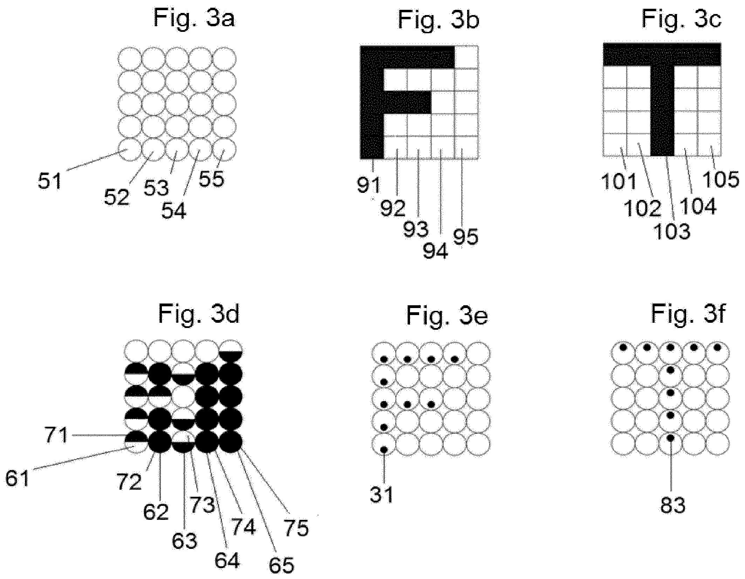

In der Fig. 3a ist eine aus 5 x 5 Kugelabschnitten 51, 52, 53, 54, 55 bestehende orthogonale Reliefschicht 50 des optisch variablen Elementes 20 dargestellt. Die 25 Kugelabschnitte 51, 52, 53, 54, 55 sind orthogonal in fünf Reihen und fünf Zeilen angeordnet. Sie bilden ein Kugelabschnittsraster aus. Mit Bezugszeichen bezeichnet sind nur die ersten fünf Kugelabschnitte 51, 52, 53, 54, 55.

Die Fig. 3b zeigt ein erstes Motiv, den Buchstaben "F", und die Fig. 3c ein zweites Motiv, den Buchstaben "T". Das erste und zweite Motiv sind in einem dem Kugelabschnittsraster entsprechenden orthogonalen 5 x 5 Raster jeweils in Teilmotive 91, 92, 93, 94, 95, 101, 102, 103, 104, 105 zerlegt. Dabei ist nur die erste Zeile der Teilmotive 91, 92, 93, 94, 95 bzw. 101, 102, 103, 104, 105 dargestellt. Jedes Motiv der beiden Motive besteht hier tatsächlich aus jeweils 25 Teilmotiven. Die 25 Kugelabschnitte 51, 52, 53, 54, 55 sind in einem orthogonalen Fünferraster angeordnet. Das Funktionsprinzip wird anhand der ersten Reihe von Kugelabschnitten 51, 52, 53, 54, 55 dargestellt. Es kann analog auf die anderen vier Reihen von jeweils fünf Kugelabschnitten übertragen werden.

Jeder der Kugelabschnitte 51, 52, 53, 54, 55 ist in jeweils erste und zweite Reflexionsbereiche 61, 62, 63, 64, 65 bzw. 71, 72, 73, 74, 75 unterteilt. In der Fig. 3d sind die ersten Reflexionsbereiche 61, 62, 63, 64, 65 jeweils als untere Hälfte jedes Kugelabschnitts 51, 52, 53, 54, 55 ausgebildet, und die zweiten Reflexionsbereiche 71, 72, 73, 74, 75 sind als obere Hälfte der Kugelabschnitte 51, 52, 53, 54, 55 ausgebildet.

Die Teilmotive 91, 92, 93, 94, 95 sind den Reflexionsbereichen 61, 62, 63, 64, 65 zugeordnet und die Teilmotive 101, 102, 103, 104, 105 sind den Reflexionsbereichen 71, 72, 73, 74, 75 zugeordnet.

Die ersten Reflexionsbereiche 61, 62, 63, 64, 65 bilden bei einer Reflexion der Lichtquelle in eine erste Betrachterposition 41 das erste Motiv, den Buchstaben "F", und die zweiten Reflexionsbereiche 71, 72, 73, 74, 75 bilden bei einer Reflexion der Lichtquelle 41 in eine zweite Betrachterposition 42 den Buchstaben "T" aus. Der Reflexionsgrad der Kugelabschnitte 51, 52, 53, 54, 55 ist derart ausgebildet, dass die ersten Reflexionsbereiche 61, 62, 63, 64, 65 den Buchstaben "F" kodieren und die zweiten Reflexionsbereiche 71, 72, 73, 74, 75 den Buchstaben "T" kodieren.

In der Fig. 3d sind die ersten und zweiten Reflexionsbereiche 61, 62, 63, 64, 65, 71, 72, 73, 74, 75 mit hohem gerichteten Reflexionsgrad weiß und Reflexionsbereiche mit niedrigem gerichteten Reflexionsgrad schwarz dargestellt. Der Betrachter nimmt aus einer ersten Betrachterposition 41, die sich entsprechend der Geometrie in Fig. 2 bestimmt, erste Reflexe 31 des ersten Motivs "F" als helle Punkte wahr, die in Fig. 3e dargestellt sind und in der Summe der ersten Reflexe 31 somit den Buchstaben "F" darstellen. Aus einer zweiten Betrachterposition 42, die von der ersten Betrachterposition 41 abweicht, erkennt der Betrachter beim Betrachten des optisch variablen Sicherheitselementes 20 gemäß Fig. 3d zweite Reflexe 83, die in der Fig. 3f dargestellt sind, die Summe der zweiten Reflexe 83 stellen den Buchstaben "T" dar. In den Fign. 3e und 3f sind die Reflexe durch dunkle Punkte dargestellt. In den Fign. 3e, 3f ist jeweils aus Übersichtlichkeitsgründen nur ein Reflex 31, 83 bezeichnet.

Wenn das optisch variable Sicherheitselement 20 gemäß Fig. 3 vom Betrachter hin und her gekippt wird, so wird der Betrachter einen Wechseleffekt zwischen erstem und zweitem Motiv "F" und "T" beobachten. Der Kippwinkel entspricht dem Winkel zwischen der ersten und zweiten Betrachterposition 41, 42.

Wenn das optisch variable Sicherheitselement 20 gemäß Fig. 3d im diffusen Licht betrachtet wird, so kann ein Betrachter eine diffuse Überlagerung aus den beiden Motiven "F" und "T" wahrnehmen, die sich nicht in Abhängigkeit des Kippwinkels ändert; das liegt physikalisch daran, dass sich der Wechseleffekt nicht durch Abschattung des einen Motivs durch das andere ergibt, also dadurch, dass Bereiche auf der Oberfläche 3 der Kugelabschnitte 51, 52, 53, 54, 55 aus dem Betrachtungswinkel nicht mehr wahrgenommen werden können, der Wechseleffekt ergibt sich erfindungsgemäß vielmehr dadurch, dass die Reflexe 31, 83 einer gerichteten Reflexion der Punktlichtquelle 1 deutlich heller sind als die diffuse Überlagerung der beider Motive "F", "T". Das erste und das zweite Motiv "F" und "T" sind bei diffusem Lichteinfall aus jeder Betrachterposition, insbesondere der ersten und zweiten Betrachterposition 41, 42, als Überlagerung zu erkennen.

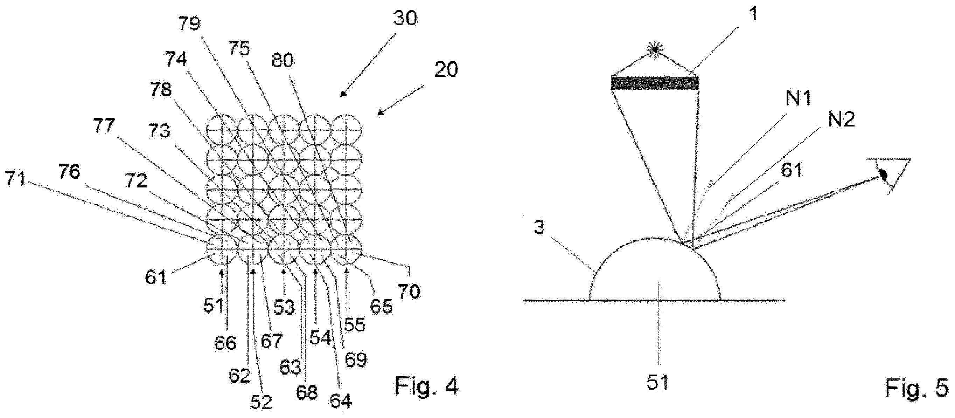

Fig. 4 zeigt ein Ausführungsbeispiel der Reliefschicht 50 eines optisch variablen Sicherheitselementes 20, bei dem das Relief wiederum durch 25 Einzelelemente gebildet ist, die jeweils ebenfalls als Kugelabschnitt 51, 52, 53, 54, 55 ausgebildet sind. Die Kugelabschnitte 51, 52, 53, 54, 55 sind hier jeweils in einen ersten Reflexionsbereich 61, einen zweiten Reflexionsbereich 71, einen dritten Reflexionsbereich 66 und einen vierten Reflexionsbereich 76 aufgeteilt, grundsätzlich lässt sich die Oberfläche 3 insbesondere von Kugelabschnitten 51, 52, 53, 54, 55 in eine andere, insbesondere auch höhere, Anzahl an Reflexionsbereichen aufteilen. Die Aufteilung ist für alle fünfundzwanzig Kugelabschnitte 51, 52, 53, 54, 55 gleich.

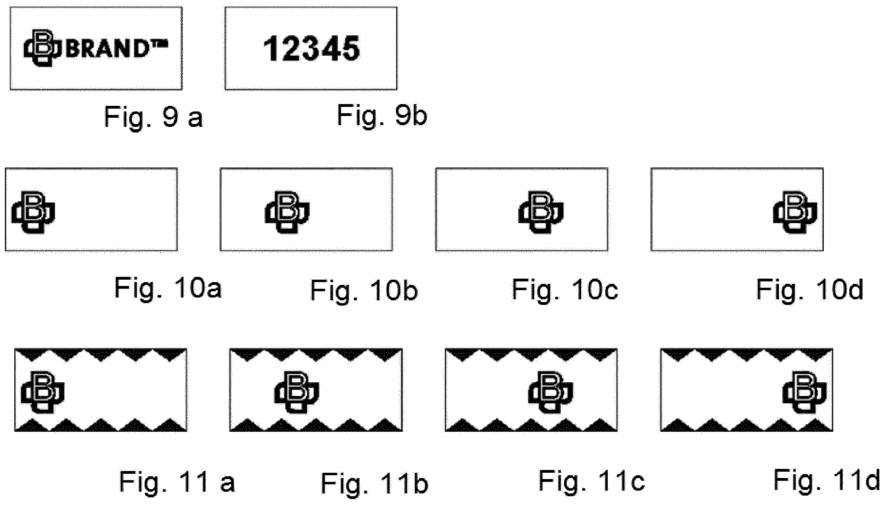

Es ist natürlich auch denkbar, die Kugelabschnitte 51, 52, 53, 54, 55 in eine andere Anzahl von N Reflexionsbereichen einzuteilen, die jeweils einen unterschiedlichen Reflexionsgrad aufweisen können. Dadurch lassen sich N Motive in einem optisch variablen Sicherheitselement 20 kodieren, die aus N verschiedenen Betrachterpositionen wahrgenommen werden. Auf diese Weise lassen sich auch bewegte Animationen in das optisch variable Sicherheitselement 20 kodieren, diese sind beispielsweise in den Fig. 10a bis 10d beziehungsweise 11a bis 11d dargestellt. Dabei ändern sich die Motive benachbarter Betrachterpositionen nur schrittweise. Das wahrgenommene Motiv hängt von der Position der Lichtquelle im Raum, von Lage und Position des optisch variablen Sicherheitselementes 20 und von der Position des Betrachters im Raum ab. Wird das optisch variable Sicherheitselement 20 gekippt oder bewegt, ändern sich die relativen Lagen zueinander, und andere Motive können wahrgenommen werden. Hierbei können unterschiedliche Motive dargestellt werden, je nachdem, ob das optisch variable Sicherheitselement 20 nach vorne oder nach hinten gekippt wird, ob es nach rechts oder nach links gekippt wird oder ob es rotiert wird.

Wenn die beiden voneinander unabhängigen Betrachterpositionen 41, 42 einen Abstand haben, der in etwa dem Abstand der Augen eines Augenpaares des Betrachters entspricht, kann ein stereoskopischer Effekt erzielt werden, wenn sich aus den beiden Betrachterpositionen 41, 42 unterschiedliche Perspektiven desselben Bildes darstellen. Durch eine Bewegungsanimation zusammen mit dem stereoskopischen Effekt kann auf diese Weise der Eindruck eines unter oder über der Oberfläche schwebenden Objektes entstehen.

Fig. 5 zeigt den Kugelabschnitt 51. Die nicht-diffuse Lichtquelle 1 ist jedoch nicht als Punktlichtquelle ausgebildet, sondern als Beleuchtungsfläche. Je größer die Beleuchtungsfläche bzw. der Beleuchtungsraumwinkel ist, desto größer ist der erste Reflexionsbereich 61 und der erste Reflex 31 auf der gekrümmten spiegelnden Oberfläche 3, die Größe hängt dann vom Beleuchtungsraumwinkel und von der Krümmung der Oberfläche 3 ab.

Bei einer flächigen größeren Lichtquelle 1 ergibt sich daraus eine minimale Größe des Lichtreflexes gemäß Fig. 5. In diesem Fall wird die Unterteilung der Oberfläche 3 des Kugelabschnitts 51 in Reflexionsbereiche 61, 66, 71, 76 so erfolgen, dass jeder Reflexionsbereich 61, 66, 71, 76 des Kugelabschnitts 51 mindestens die Größe des Reflexes 31 hat, ansonsten würden sich die unterschiedlichen Motive überlagern. Umgekehrt darf die nicht-diffuse Lichtquelle 1 eine gewisse Ausdehnung auch nicht überschreiten, wenn ein optisch variables Sicherheitselement 20 noch sinnvoll ausgelesen werden soll. Im Allgemeinen wird man die Größe der Reflexionsbereiche 61, 66, 71, 76 so wählen, dass in den meisten Beleuchtungssituationen, z. B. Innenraumbeleuchtung, die einzelnen Teilmotive getrennt voneinander wahrgenommen werden können.

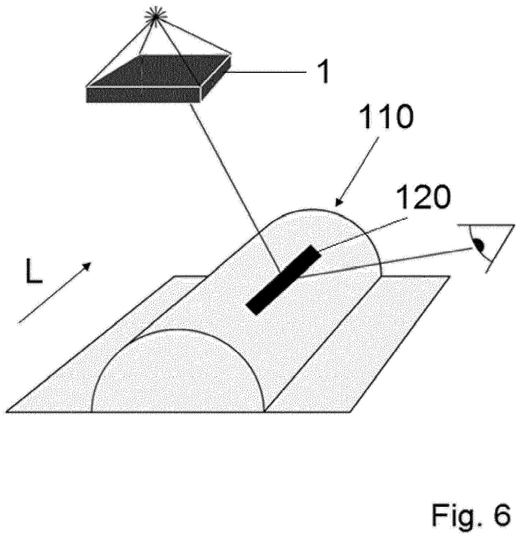

In einer anderen Ausführungsform der Erfindung sind die Einzelelemente der Reliefschicht 50 gemäß Fig. 6 als Zylinderabschnitt 110 ausgebildet. Im Gegensatz zur Reflexion auf der Oberfläche 3 des Kugelabschnitts 51 entsteht bei Beleuchtung eines spiegelnden Zylinderabschnitts 110 mit der ausgedehnten Lichtquelle 1 als Reflex nicht ein Lichtpunkt, sondern im Wesentlichen eine Lichtlinie 120, die parallel zu einer Zylinderachse ausgerichtet ist und die ungefähr die Länge der Lichtquelle 1 in einer Längsrichtung L aufweist. Die den Motiven zugeordneten Reflexionsbereiche sind daher so angeordnet, dass pro Zylinderabschnitt 110 in Längsrichtung L jeweils mehrere erste und zweite Reflexionsbereiche nebeneinander liegend vorgesehen sind.

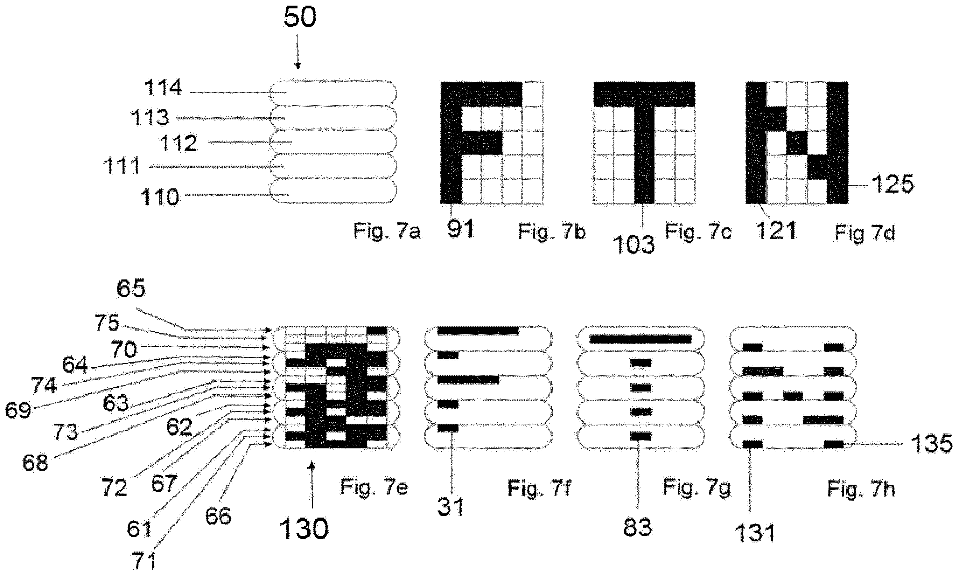

Fig. 7a zeigt die Anordnung der als Zylinderabschnitte 110, 111, 112, 113, 114 ausgebildeten Einzelstrukturen, die die Reliefschicht 50 ausbilden. Die Fig. 7b bis 7d zeigen das erste Motiv, den Buchstaben "F", das zweite Motiv, den Buchstaben "T" und ein drittes Motiv, den Buchstaben "N". Jedes der Motive ist in jeweils 5 x 5 Teilmotive aufgeteilt. Die Aufteilung ist disjunkt.

Fig. 7e zeigt eine auf die Reliefschicht 50 in Fig. 7a aufgebrachte Informationsschicht 130, wobei die ersten Reflexionsbereiche 61, 62, 63, 64, 65 jeweils fünf kleinere erste Reflexionsbereiche auf jedem Zylinderabschnitt 110, 111, 112, 113, 114 aufweisen. Die kleineren ersten Reflexionsbereiche sind auf jedem Zylinderabschnitt 110, 111, 112, 113, 114 die in Fig. 7e obersten fünf in Längsrichtung L nebeneinander angeordneten rechteckigen Reflexionsbereiche. Die zweiten Reflexionsbereiche 71, 72, 73, 74, 75 sind ebenfalls jeweils in fünf kleinere zweite Reflexionsbereiche unterteilt, das sind die mittleren fünf in Längsrichtung L nebeneinander angeordneten kleinen rechteckigen Reflexionsbereiche in jedem Zylinderabschnitt 110, 111, 112, 113, 114, und die dritten Reflexionsbereiche 66, 67, 68, 69, 70 sind jeweils die fünf unteren Reflexionsbereiche in jedem Zylinderabschnitt 110, 111, 112, 113, 114 in Fig. 7e. Die jeweils fünf einem Bild zugeordneten Reflexionsbereiche eines Zylinderabschnitts 110, 111, 112, 113, 114 sind in einer Bildlinie parallel zur Zylinderachse angeordnet und erzeugen bei der Reflexion bis zu fünf Reflexionsbalken.

In Fig. 7e sind die Reflexionsbereiche 61, 62, 63, 64, 65, 71, 72, 73, 74, 75, 66, 67, 68, 69, 70 mit einem hohen Reflexionsgrad weiß und die mit einem geringen Reflexionsgrad schwarz dargestellt. Die ersten Reflexionsbereiche 61, 62, 63, 64, 65 kodieren durch die Ausbildung unterschiedlicher Reflexionsgrade das erste Motiv "F", die zweiten Reflexionsbereiche 71, 72, 73, 74, 75 kodieren das zweite Motiv "T" und die dritten Reflexionsbereiche 66, 67, 68, 69, 70 kodieren das dritte Motiv "N". Dabei ist jeder erste Reflexionsbereich 61, 62, 63, 64, 65 in fünf kleinere erste Reflexionsbereiche unterteilt. Entsprechendes gilt für die zweiten 71, 72, 73, 74, 75 und dritten Reflexionsbereiche 66, 67, 68, 69, 70.

In den Fign. 7f, 7g und 7h ist das sich aus einzelnen Reflexen 31, 83, 131, 135 dem Betrachter darstellende Motiv aus einer ersten Betrachterposition 41 bzw. aus einer zweiten Betrachterposition 42 bzw. aus einer dritten Betrachterposition dargestellt. Dabei sind nur die den untersten Reflexionsbereichen 61, 71, 66 zugeordneten Reflexe 31, 83, 131, 135 mit Bezugszeichen bezeichnet.

Die aus der ersten Betrachterposition 41 erkennbaren ersten Reflexe 31 stellen insgesamt den Buchstaben "F" dar, und die in der zweiten Betrachterposition 42 erkennbaren zweiten Reflexe 83 stellen insgesamt den Buchstaben "T" dar. Die dritten Reflexe 131, 135 stellen in der dritten Betrachterposition insgesamt den Buchstaben "N" dar. Wenn das optisch variable Sicherheitselement 20 gemäß Fig. 7e vom Betrachter hin und her gekippt wird, so wird der Betrachter einen Wechseleffekt zwischen den drei Motiven der Figuren 7f, 7g, 7h beobachten, wenn das optisch variable Sicherheitselement 20 in nicht-diffusem Licht beleuchtet wird.

Wird das optisch variable Sicherheitselement 20 hingegen mit diffusem Licht beleuchtet, so wird der Betrachter eine diffuse Überlagerung aus den drei Motiven "F", "T" und "N" wahrnehmen, die sich nicht in Abhängigkeit des Kippwinkels ändert. Der Wechseleffekt zwischen den Motiven durch Kippen des optisch variablen Sicherheitselementes 20 entsteht nicht durch Abschattung, also dadurch, dass Bereiche der Oberfläche 3 aus dem Betrachtungswinkel herausfallen und von anderen Bereichen der Oberfläche 3 verdeckt werden. Der Wechseleffekt ergibt sich erfindungsgemäß dadurch, dass die Reflexe 31, 83, 131, 135 der nicht-diffusen Lichtquelle 1 in Richtung der Betrachterpositionen 41, 42 deutlich heller sind als die diffuse Überlagerung der drei Motive.

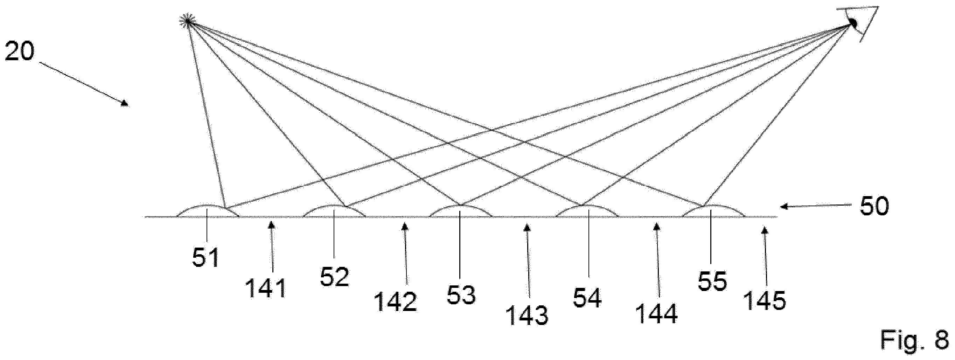

In Fig. 8 ist eine dritte Ausführungsform des optisch variablen Sicherheitselementes 20 dargestellt, bei dem die Reliefschicht 50 aus Kugelabschnitten 51, 52, 53, 54, 55 und aus planaren Bereichen 141, 142, 143, 144, 145 besteht, die sich abwechselnd und in einem Raster wiederholen, im Beispiel gemäß Fig. 8 beträgt der Flächenanteil der planaren Bereiche 141, 142, 143, 144, 145 zusammen 50%, in den planaren Bereichen 141, 142, 143, 144, 145 können weitere optisch wirksame Strukturen untergebracht werden, die auf den gekrümmten Kugelabschnitten 51, 52, 53, 54, 55 nicht oder nur eingeschränkt realisierbar oder wirksam sind, wie beispielsweise Beugungsgitter, Fourierhologramme und Fresnelhologramme oder auch Mikrobilder oder Mikroschriften.

Durch Kippen optisch variabler Sicherheitselemente 20 können verschiedene Einzelmotive in verschiedenen Betrachterpositionen 41, 42 erzeugt werden, wie in den Fig. 9a und 9b dargestellt, die voneinander völlig unabhängig sind. Hier ist das erste Bild ein Logo und das zweite Bild eine Seriennummer.

In den Fig. 10a bis 10d sind fünf Einzelmotive einer Bewegungsanimation dargestellt; für eine fließende Bewegungsanimation sollten weitere entsprechende Zwischenbilder verwendet werden. Ein Betrachter kann durch Kippen des optisch variablen Sicherheitselementes 20 eine solche Animation wahrnehmen, eine solche Bewegungsanimation ist mit dem Moire-Vergrößerer verwandt, bzw. sie kann in einen solchen überführt werden. Die Erfindung ist jedoch keineswegs auf Bewegungsanimationen eingeschränkt, es ist jede beliebige Animation möglich, z.B. Rotations- oder Vergrößerungsanimationen.

Wenn die Einzelbilder der Bewegungsanimationen der Fig. 10a bis 10d derart in das optisch variable Sicherheitselement 20 kodiert sind, dass jedes Auge des Betrachters ein anderes Bild der Bewegungsanimation wahrnimmt, so entsteht der oben angesprochene stereoskopische Effekt, also ein Tiefeneindruck, als ob das Bild über oder unter der Ebene des optischen Elementes schwebt.

In den Fig. 11a bis 11d sind fünf Einzelbilder einer Bewegungsanimation dargestellt; für eine fließende Bewegungsanimation sollten weitere entsprechende Zwischenbilder verwendet werden. Zusätzlich zu Bewegungsanimationen sind statische Elemente untergebracht, hier in Form eines gezackten Randes. Bei diffuser Beleuchtung kann die Animation nicht wahrgenommen werden, sondern die Überlagerung der Einzelbilder und der gezackte Rand sind ebenfalls sichtbar.

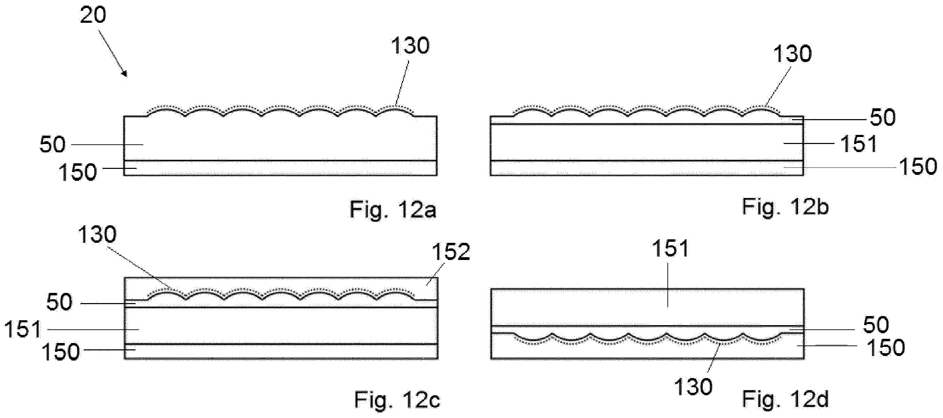

In den Fig. 12a bis 12d sind mögliche Schichtaufbauten des optisch variablen Sicherheitselementes 20 dargestellt.

Fig. 12a zeigt einen Schichtaufbau mit der Reliefschicht 50, der in Fig. 12a direkt oben angrenzenden Informationsschicht 130, dargestellt durch eine gestrichelte Linie, und einer Kleberschicht 150, die der Reliefschicht 50 gegenüberliegend vorgesehen ist. Die Reliefschicht 50 ist eine Polymerfolie, in die das Relief direkt durch Hitze- und Druckeinwirkung eingeprägt ist. Die Informationsschicht 130 ist in allen Ausführungsbeispielen als gestrichelte Linie dargestellt.

In Fig. 12b ist ein Schichtaufbau mit der Reliefschicht 50, der durch eine gestrichelte Linie dargestellten, direkt außen angrenzenden Informationsschicht 130, einer Trägerschicht 151 und der Kleberschicht 150 dargestellt, wobei die Trägerschicht 151 zwischen der Kleberschicht 150 und der Reliefschicht 50 angeordnet ist und die Informationsschicht 130 der Trägerschicht 151 an der Reliefschicht 50 gegenüberliegend vorgesehen ist. Die Trägerschicht 151 ist eine Polymerfolie, die Reliefschicht 50 ist beispielsweise eine Lackschicht, die durch UV-Prägung erzeugt ist.

In Fig. 12c ist ein Schichtaufbau in der Reihenfolge Schutzschicht 152, Informationsschicht 130, Reliefschicht 50, Trägerschicht 151 und Kleberschicht 150 dargestellt, und in der Fig. 12d ist ein Schichtaufbau in der Reihenfolge Trägerschicht 151, Reliefschicht 50, Informationsschicht 130, Kleberschicht 150 dargestellt. Die über der Informationsschicht 130 liegenden Schichten müssen für diesen Aufbau weitgehend transparent sein. Vorteilhaft an der Anordnung 12c oder 12d ist, dass die Informationsschicht 130 gegenüber der Außenwelt geschützt ist und eine hohe Unempfindlichkeit gegen Kratzer erreicht wird. Ein weiterer Vorteil ist, dass es für die Funktionalität nicht notwendig ist, die über der Informationsschicht 130 liegenden Schichten im Brechungsindex anzupassen.

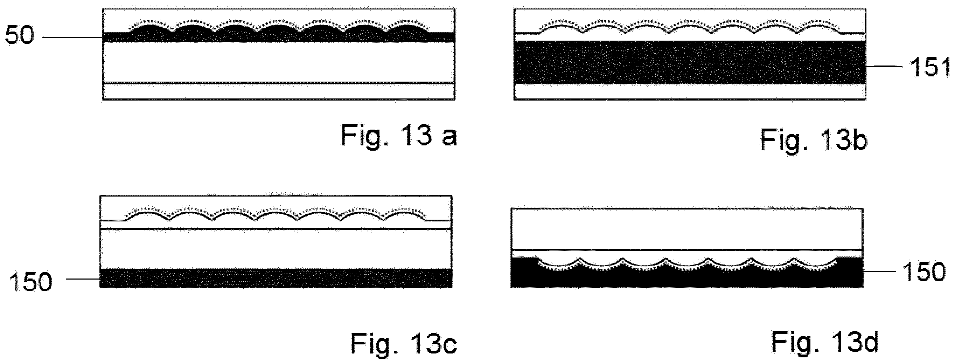

Es besteht die Möglichkeit, in den Schichtaufbau eine kontrastgebende Schicht einzubauen. Fig. 13a zeigt in Erweiterung zur Ausführungsform der Fig. 12c die Reliefschicht 50, die als kontrastgebende Schicht ausgestaltet ist, in Fig. 13b ist ebenfalls in Abwandlung zur Ausführungsform der Fig. 12d die Trägerschicht 151 als kontrastgebende Schicht ausgestaltet. Anstatt der Trägerschicht 151 können auch zusätzliche oder stattdessen kontrastgebende Schichten hinzugefügt werden. In den Ausführungsformen gemäß Fig. 13c und 13d ist die Kleberschicht 150 als kontrastgebende Schicht ausgestaltet, in Ergänzung zu den Ausführungsformen in den Fig. 12c und 12d.

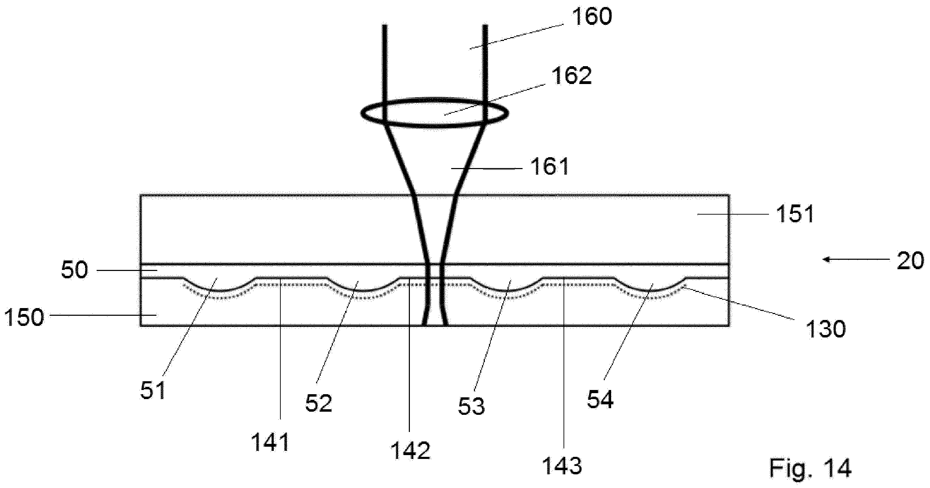

In der Fig. 14 ist die in Fig. 12d dargestellte Ausführungsform des optisch variablen Sicherheitselementes 20 dargestellt. Die Informationsschicht 130 ist in diesem Fall eine metallisierte Schicht, die beispielsweise durch Vakuumbedampfung der Reliefschicht 50 hergestellt wird oder durch vollflächige Bedruckung der Reliefschicht 50 mit einem Metallpigmentlack hergestellt wird. Die vollständig metallisierte Schicht wird mit einem Laserlithographen 160 bearbeitet. Bei der Bearbeitung mit einem Laserlithographen 160 wird ein Laserstrahl 161 in der Informationsschicht 130 stark fokussiert, und es werden belichtete Bereiche durch die Lasereinwirkung demetallisiert, wodurch der gerichtete Reflexionsgrad der metallisierten Schicht an dieser Stelle sinkt. Die Trägerschicht 151 und die Reliefschicht 50 sind hingegen im Wesentlichen transparent für den Laserstrahl 161, sodass in diesen Schichten keine substanzzerstörende Wärmeentwicklung erfolgen wird.

In Fig. 14 ist der Strahlengang des Laserlithographen 160 abstrakt durch dicke Linien dargestellt. Der Laserstrahl 161 wird mittels einer Optik 162 fokussiert, so dass er im Bereich der Informationsschicht 130 einen kleinen Durchmesser hat, was zu einem hohen Energieeintrag in einem kleinen Bereich und somit zur Belichtung eines kleinen Bereiches bzw. eines Punktes führt. Der Bereich des kleinen Durchmessers hat bei dem fokussierten Laserstrahl 161 eine gewisse Länge, woraus sich eine Tiefentoleranz ergibt, die ungefähr dieser Länge entspricht. Ist die Tiefentoleranz größer als die Höhe der Reliefschicht 50, kann die Informationsschicht 130 vollständig mit dem Laserstrahl 161 bearbeitet werden, obwohl sie nicht eben ist. In Fig. 14 wechseln sich in der Reliefschicht 50 planare Bereiche 141, 142, 143 und Kugelabschnitte 51, 52, 53, 54, 54 alternierend ab, der Laserlithograph 160 kann in den planaren Bereichen 141, 412, 143 weitere optisch wirksame Strukturen integrieren wie Beugungsgitter, Hologramme oder Fresnelhologramme.

### Bezugszeichenliste

- 1: nicht-diffuse Lichtquelle
- 3: Oberfläche
- 20: optisch variables Sicherheitselement
- 21 a: erster einfallender Lichtstrahl
- 21 b: erster reflektierter Lichtstrahl
- 22a: zweiter einfallender Lichtstrahl
- 22b: zweiter reflektierter Lichtstrahl
- 31: erster Reflex
- 32: erster Reflex
- 33: erster Reflex
- 34: erster Reflex
- 41: erste Betrachterposition
- 42: zweite Betrachterposition
- 50: Reliefschicht
- 51: Kugelabschnitt
- 52: Kugelabschnitt
- 53: Kugelabschnitt
- 54: Kugelabschnitt
- 55: Kugelabschnitt
- 61: erster Reflexionsbereich
- 62: erster Reflexionsbereich
- 63: erster Reflexionsbereich
- 64: erster Reflexionsbereich
- 65: erster Reflexionsbereich
- 66: dritter Reflexionsbereich
- 67: dritter Reflexionsbereich
- 68: dritter Reflexionsbereich
- 69: dritter Reflexionsbereich
- 70: dritter Reflexionsbereich
- 71: zweiter Reflexionsbereich
- 72: zweiter Reflexionsbereich
- 73: zweiter Reflexionsbereich
- 74: zweiter Reflexionsbereich
- 75: zweiter Reflexionsbereich
- 76: vierter Reflexionsbereich
- 77: vierter Reflexionsbereich
- 78: vierter Reflexionsbereich
- 79: vierter Reflexionsbereich
- 80: vierter Reflexionsbereich
- 83: zweite Reflexe
- 91: erstes Teilmotiv
- 92: erstes Teilmotiv
- 93: erstes Teilmotiv
- 94: erstes Teilmotiv
- 95: erstes Teilmotiv
- 101: zweites Teilmotiv
- 102: zweites Teilmotiv
- 103: zweites Teilmotiv
- 104: zweites Teilmotiv
- 105: zweites Teilmotiv
- 110: Zylinderabschnitt
- 111: Zylinderabschnitt
- 112: Zylinderabschnitt
- 113: Zylinderabschnitt
- 114: Zylinderabschnitt
- 120: Lichtlinie
- 130: Informationsschicht
- 131: dritter Reflex
- 135: dritter Reflex
- 141: planarer Bereich
- 142: planarer Bereich
- 143: planarer Bereich
- 144: planarer Bereich
- 145: planarer Bereich
- 150: Kleberschicht
- 151: Trägerschicht
- 152: Schutzschicht
- 160: Laserlithograph
- 161: Laserstrahl
- 162: Optik
- N₁: Flächennormale
- N₂: Flächennormale
- L: Längsrichtung

## Patentansprüche

1. Verfahren zur Herstellung eines optisch variablen Sicherheitselementes (20), indem
ein erstes Motiv (F) in erste Teilmotive (91, 92, 93, 94, 95) zerlegt wird, den ersten Teilmotiven (91, 92, 93, 94, 95) erste gerichtete Reflexionsgrade zugeordnet werden, die das erste Motiv (F) kodieren, ein weiteres Motiv (T, N) in weitere Teilmotive (101, 102, 103, 104, 105, 121, 125) zerlegt wird,
dem weiteren Teilmotiv (101, 102, 103, 104, 105, 121, 125) weitere gerichtete Reflexionsgrade zugeordnet werden, die das weitere Motiv kodieren,
eine Reliefschicht (50) mit einer Vielzahl an gleichartigen gewölbten optischen Einzelelementen (51, 52, 53, 54, 55, 110, 111, 112, 113, 114) mit jeweils einer Einzelelementoberfläche (3) gefertigt wird, wobei die Einzelelemente kleiner als 100 µm, vorzugsweise 75 µm, besonders bevorzugt 50 µm, sind,
die Einzelelementoberflächen (3) in erste Reflexionsbereiche (61-65) und weitere Reflexionsbereiche (66-80) unterteilt werden,
die ersten Reflexionsbereiche (61-65) verschiedener Einzelelementoberflächen (3) dem ersten Motiv (F) zugeordnet werden, die dem ersten Motiv (F) zugeordneten ersten Reflexionsbereiche (61-65) mit den ersten gerichteten Reflexionsgraden versehen werden, die weiteren Reflexionsbereiche (66-80) verschiedener Einzelelementoberflächen (3) dem weiteren Motiv (T, N) zugeordnet werden, die dem weiteren Motiv (T, N) zugeordneten weiteren Reflexionsbereiche (66-80) mit den weiteren gerichteten Reflexionsgraden versehen werden und eine Kleberschicht (150) zum Aufkleben des Sicherheitselementes (20) vorgesehen wird, wobei die Reliefschicht (50) vollständig metallisiert wird und danach eine Informationsschicht (130) ausgebildet wird, indem Reflexionsbereiche (61-80) mit niedrigem Reflexionsgrad entmetallisiert werden, wobei die Metallisierung mit einem Laserlithographen (160) entmetallisiert wird.

2. Verfahren nach Anspruch 1,
**dadurch gekennzeichnet, dass** Positionen der ersten Reflexionsbereiche (61-65) auf den Einzelelementoberflächen (3) ermittelt werden, indem aus einer vorgegebenen ersten Betrachterposition (41) eine Position eines ersten Reflexes (31) einer gerichteten Reflexion einer nicht-diffusen Lichtquelle (1) auf jeder der Einzelelementoberflächen (3) ermittelt wird und um die Positionen der ersten Reflexe (31) der gerichteten Reflexionen herum die dem ersten Motiv (F) zugeordneten ersten Reflexionsbereiche (61-65) angeordnet werden.

3. Verfahren nach Anspruch 1 oder 2,
**dadurch gekennzeichnet, dass** eine von der ersten Betrachterposition (41) abweichende weitere Betrachterposition (42) gewählt wird und eine Position eines weiteren Reflexes (83, 131, 135) einer weiteren gerichteten Reflexion der nicht-diffusen Lichtquelle (1) auf jeder der Einzelelementoberflächen (3) ermittelt wird und um die Positionen der Reflexe (83, 131, 135) der weiteren gerichteten Reflexion herum die dem weiteren Motiv (T, N) zugeordneten Reflexionsbereiche (66-80) angeordnet werden.

4. Verfahren nach einem der vorstehenden Ansprüche,
**dadurch gekennzeichnet, dass** die ersten Reflexionsbereiche (61-65) und die weiteren Reflexionsbereiche (66-80) einfallendes Licht (21a, 22a) gerichtet reflektieren.

5. Verfahren nach einem der vorstehenden Ansprüche,
**dadurch gekennzeichnet, dass** die Reliefschicht (50) derart ausgebildet wird, dass die ersten und die weiteren Reflexionsbereiche (66-80) bei nicht-diffusem Lichteinfall aus der zweiten Betrachterposition (42) bzw. der ersten Betrachterposition (41) nicht zu erkennen sind und bei diffusem Lichteinfall sowohl das erste als auch das weitere Motiv sowohl aus der ersten (41) als auch aus der weiteren Betrachterposition (42) als Überlagerung zu erkennen sind.

## Claims

1. Method for producing an optically variable security element (20) by
decomposing a first pattern (F) into first subpatterns (91, 92, 93, 94, 95),
assigning first directional reflectivities, which encode the first pattern (F), to the first subpatterns (91, 92, 93, 94, 95),
decomposing a further pattern (T, N) into further subpatterns (101, 102, 103, 104, 105, 121, 125),
assigning further directional reflectivities, which encode the further pattern, to the further subpattern (101, 102, 103, 104, 105, 121, 125),
producing a relief layer (50) having a multiplicity of identical domed individual optical elements (51, 52, 53, 54, 55, 110, 111, 112, 113, 114), each having an individual elementary surface (3), wherein the individual elements are smaller than 100 µm, preferably 75 µm, particularly preferably 50 µm,
subdividing the individual elementary surfaces (3) into first reflectance regions (61-65) and further reflectance regions (66-80),
assigning the first reflectance regions (61-65) of different individual elementary surfaces (3) to the first pattern (F),
providing the first reflectance regions (61-65) assigned to the first pattern (F) with the first directional reflectivities,
assigning the further reflectance regions (66-80) of different individual elementary surfaces (3) to the further pattern (T, N),
providing the further reflectance regions (66-80) assigned to the further pattern (T, N) with the further directional reflectivities and providing an adhesive layer (150) for adhesion of the security element (20), wherein the relief layer (50) is fully metallized, and an information layer (130) is subsequently formed by demetallizing reflectance regions (61-80) having a low reflectivity, wherein the metallization is demetallized with a laser lithograph (160).

2. Method according to Claim 1,
**characterized in that** positions of the first reflectance regions (61-65) on the individual elementary surfaces (3) are determined by determining a position of a first reflection (31) of a directional reflectance of a nondiffuse light source (1) on each of the individual elementary surfaces (3) from a predetermined first observer position (41) and arranging the first reflectance regions (61-65) assigned to the first pattern (F) around the positions of the first reflections (31) of the directional reflectances.

3. Method according to Claim 1 or 2,
**characterized in that** a further observer position (42) different to the first observer position (41) is selected, and a position of a further reflection (83, 131, 135) of a further directional reflectance of the nondiffuse light source (1) on each of the individual elementary surfaces (3) is determined, and the reflectance regions (66-80) assigned to the further pattern (T, N) are arranged around the positions of the reflections (83, 131, 135) of the further directional reflectance.

4. Method according to one of the preceding claims,
**characterized in that** the first reflectance regions (61-65) and the further reflectance regions (66-80) directionally reflect incident light (21a, 22a).

5. Method according to one of the preceding claims,
**characterized in that** the relief layer (50) is configured in such a way that the first and the further reflectance regions (66-80) cannot be seen under nondiffuse light incidence from the second observer position (42) or the first observer position (41), and under diffuse light incidence both the first pattern and the further pattern can be seen as a superposition both from the first observer position (41) and from the further observer position (42).

## Revendications

1. Procédé de fabrication d'un élément de sécurité optiquement variable (20), dans lequel
un premier motif (F) est décomposé en premiers motifs partiels (91, 92, 93, 94, 95),
des premières réflectances spéculaires codant le premier motif (F) sont associées aux premiers motifs partiels (91, 92, 93, 94, 95),
un motif supplémentaire (T, N) est décomposé en motifs partiels supplémentaires (101, 102, 103, 104, 105, 121, 125),
des réflectances spéculaires supplémentaires codant le motif supplémentaire sont associées au motif partiel supplémentaire (101, 102, 103, 104, 105, 121, 125),
une couche en relief (50) avec une pluralité d'éléments individuels optiques courbes identiques (51, 52, 53, 54, 55, 110, 111, 112, 113, 114) est fabriquée avec une surface d'élément individuel (3) respectivement, les éléments individuels étant inférieurs à 100 µm, de préférence à 75 µm, de manière particulièrement préférée à 50 µm,
les surfaces d'élément individuel (3) sont divisées en premières zones de réflexion (61 à 65) et en zones de réflexion supplémentaires (66 à 80),
les premières zones de réflexion (61 à 65) de différentes surfaces d'élément individuel (3) sont associées au premier motif (F),
les premières zones de réflexion (61 à 65) associées au premier motif (F) sont munies des premières réflectances spéculaires, les zones de réflexion supplémentaires (66 à 80) de différentes surfaces d'élément individuel (3) sont associées au motif supplémentaire (T, N), les zones de réflexion supplémentaires (66 à 80) associées au motif supplémentaire (T, N) sont munies des réflectances spéculaires supplémentaires, et une couche d'adhésif (150) est prévue pour coller l'élément de sécurité (20), dans lequel la couche en relief (50) est entièrement métallisée, et ensuite une couche d'information (130) est réalisée en ce que des zones de réflexion (61 à 80) à faible réflectance sont démétallisées, la métallisation étant démétallisée à l'aide d'un lithographe laser (160).

2. Procédé selon la revendication 1, **caractérisé en ce que** des positions des premières zones de réflexion (61 à 65) sur les surfaces d'élément individuel (3) sont déterminées **en ce qu'**une position d'un premier reflet (31) d'une réflexion spéculaire d'une source de lumière non diffuse (1) sur chacune des surfaces d'élément individuel (3) est déterminée à partir d'une première position d'observateur prédéfinie (41) et les premières zones de réflexion (61 à 65) associées au premier motif (F) sont disposées autour des positions des premiers reflets (31) des réflexions spéculaires.

3. Procédé selon la revendication 1 ou 2, **caractérisé en ce qu'**une position d'observateur supplémentaire (42), différente de la première position d'observateur (41), est sélectionnée, et une position d'un reflet supplémentaire (83, 131, 135) d'une réflexion spéculaire supplémentaire de la source de lumière non diffuse (1) sur chacune des surfaces d'élément individuel (3) est déterminée, et les zones de réflexion (66 à 80) associées au motif supplémentaire (T, N) sont disposées autour des positions des reflets (83, 131, 135) de la réflexion spéculaire supplémentaire.

4. Procédé selon l'une quelconque des revendications précédentes, **caractérisé en ce que** les premières zones de réflexion (61 à 65) et les zones de réflexion supplémentaires (66 à 80) réfléchissent de la lumière incidente (21a, 22a) de manière spéculaire.

5. Procédé selon l'une quelconque des revendications précédentes, **caractérisé en ce que** la couche en relief (50) est réalisée de telle sorte que les premières zones de réflexion et les zones de réflexion supplémentaires (66 à 80) sont invisibles en cas d'incidence de lumière non diffuse à partir de la deuxième position d'observateur (42) ou de la première position d'observateur (41), et en cas d'incidence de lumière diffuse, à la fois le premier motif et le motif supplémentaire sont visibles en superposition aussi bien à partir de la première position d'observateur (41) que de la position d'observateur supplémentaire (42) .
